# EUROPÄISCHE PATENTSCHRIFT

(11) **EP 1 003 757 B1**
(45) Veröffentlichungstag und Bekanntmachung des Hinweises auf die Patenterteilung: **29.01.2003**
(21) Anmeldenummer: 98942609.3
(22) Anmeldetag: 23.07.1998
(51) Int. Cl.: C07F 17/00

(54) **VERFAHREN ZUR HERSTELLUNG VON METALLOCENEN**
METHOD FOR PRODUCING METALLOCENES
PROCEDE DE FABRICATION DE METALLOCENES

(30) Priorität: 28.07.1997 DE 19732366
(43) Veröffentlichungstag der Anmeldung: 31.05.2000
(73) Patentinhaber: Basell Polyolefine GmbH, 67056 Ludwigshafen (DE)
(72) Erfinder: WINTER, Andreas, D-61479 Glashütten (DE); BINGEL, Carsten, D-65830 Kriftel (DE); FRAAIJE, Volker, D-60325 Frankfurt (DE); KUEBER, Frank, D-61440 Oberursel (DE)
(86) Internationale Anmeldenummer: EP9804630
(87) Internationale Veröffentlichungsnummer: WO99005153

(56) Entgegenhaltungen:
- WO-A-97/03080
- HALTERMAN, R.L. ET AL.: "synthesis of ansa-2,2'-bis((4,7-dimethyl-inde-1-yl)meth yl)-1,1'-binaphthyl and ansa -2,2'-bis((4,5,6,7-tetrahydroinden-1-yl)me thyl)-1,1'-binaphthyltitanium and -zirconium dichlorides" JOURNAL OF ORGANOMETALLIC CHEMISTRY, Bd. 520, 1996, Seiten 163-170, XP002085486
- CHEMICAL ABSTRACTS, vol. 124, no. 96, 20. Mai 1919 Columbus, Ohio, US; abstract no. 289746, WANG, D.-Q. ET AL.: "ansa-metallocene derivatives. (II). syntheses and structures of tetramethyldisiloxanediylbis(1-indenyl and tetrahydroindenyl)zirconium dichlorides" XP002085487 & GAODENG XUEXIAO HUAXUE XUEBAO, Bd. 17, Nr. 2, 1996, Seiten 231-235,

## Beschreibung

Die vorliegende Erfindung betrifft ein Verfahren zur Herstellung von rac/meso-Metallocenen, die rac/meso-Metallocene selbst und die Verwendung der rac/meso-Metallocene als Katalysatorkomponente zur Herstellung von isotaktischen Polyolefinen.

Racemische Metallocene (rac-Metallocene) mit teilhydrierten oder hydrierten p-Liganden sind als Katalysatorvorstufen für die Polymerisation von Olefinen beispielsweise in J. Organomet. Chem. 497(1995)181, Angew. Chem. 104 (1992) 1373, Organometallics 12 (1993) 4391 oder Chem. Ber. 127 (1994) 2417, J. Am. Chem. Soc. 118 (1996) 2105, Macromolecules 27 (1994) 4477 oder Macromolecules 29 (1996) 2331, EPA 0 344 887, J. Mol. Catal. A. Chem. 102 (1995) 59, EPA 0 185 918, EPA 0 537 686, EP 0 485 820 oder EP 0 485 821 beschrieben.

Bei der Synthese von Metallocenen wird aufwendig die Isolierung der racemischen Form des Metallocens angestrebt, da nur mit dieser Form stereospezifisch beispielsweise isotaktisches Polypropylen hergestellt werden kann. Die meso-Form des Metallocens wird dabei abgetrennt. Bei der Herstellung von Metallocenen mit teilhydrierten oder hydrierten p-Liganden wird zunächst die racemische Form des unhydrierten Metallocens isoliert und dann hydriert. So kann beispielsweise aus rac-Dimethylsilandiylbisindenyl-zirkoniumdichlorid durch Hydrierung das Octahydroderivat rac-Dimethylsilandiylbis-(4,5,6,7-tetrahydroindenyl)-zirkoniumdichlorid hergestellt werden. Solche und ähnliche Reaktionen sind beispielsweise beschrieben in EPA 0 344 887, J. Organomet. Chem. 497 (1995) 181, Organometallics 10 (1991) 1501 oder J. Organomet. Chem. 342 (1988) 21.

Im Journal of Organometallic Chemistry, Bd. 520, 1996, Seiten 163-170 wird die Synthese von C2-symmetrischen ansa-Bisindenylmetallocenen bzw. ansa-Bistetrahydroindenylmetallocenen beschrieben, die eine chirale Brücke zwischen den Indenylresten enthalten. In WO-97/03080 wird ein Verfahren beschrieben, in dem die achirale meso-Form eines Metallocens in Gegenwart eines chiralen Hilfsreagenzes unter photochemischen Bedingungen quantitativ in die racemische Form des mit dem chiralen Hilfsreagenzes derivatisierten Metallocens umgewandelt wird.

Die bekannten Synthesevorschriften zur Hydrierung des aromatischen Ligandgerüsts von rac-Metallocenen beschreiten im Prinzip alle den gleichen Weg. Das gereinigte rac-Metallocen wird in Dichlormethan gelöst oder suspendiert und in Gegenwart von Platinschwarz oder Platindioxid unter hohem Wasserstoffdruck hydriert (vgl. J. Organomet. Chem. 342 (1988) 21 oder EPA 0 344 887).

Dichlormethan und andere chlorierte Lösungsmittel können nur unter Einhaltung strenger Arbeitssicherheits- und Umweltauflagen in größeren Mengen eingesetzt werden. In chlorierten Lösungsmitteln können nur schwach aktivierende Hydrierkatalysatoren wie Platinschwarz oder Platindioxid verwendet werden, um Dehalogenierungsreaktionen zu vermeiden. Die Dehalogenierungsreaktionen führen zur Zersetzung des Produkts und zu Korrosionsproblemen.

Die Aufgabe der vorliegenden Erfindung liegt darin, eine effiziente, schnelle, kostengünstige und ausbeuteoptimierte direkte Synthese von Metallocenen bereitzustellen, mit denen hochisotaktische Polyolefine kostengünstig hergestellt werden können.

Die Aufgabe der vorliegenden Erfindung wird durch ein Verfahren zur direkten Herstellung von rac/meso-Metallocenen mit Tetrahydroindenylliganden gelöst. Die erfindungsgemäß hergestellten rac/meso-Metallocene können überraschenderweise direkt als Katalysatorkomponente zur Olefinpolymerisation eingesetzt werden, ohne daß eine zusätzliche, kostenintensive und ausbeutemindernde Isolierung der rac- Form notwendig ist.

Demgemäß wurde ein Verfahren zur Herstellung eines rac/meso-Metallocens der Formel I mit einem rac/meso-Verhältnis von > 20:1 bis < 200:1 gefunden, 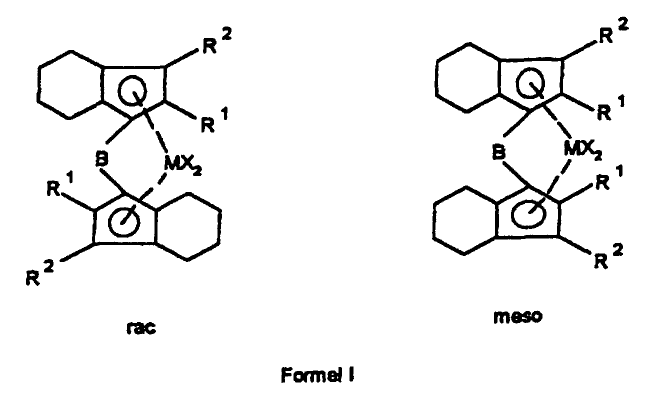 wobei
M ein Metall der Gruppen IIIb, IVb, Vb oder VIb des Periodensystems der Elemente bedeutet und bevorzugt ein Metall der Gruppe IVB wie Ti, Zr oder Hf, besonders bevorzugt Zr und Hf bedeutet,
die Reste X gleich oder verschieden sind, bevorzugt gleich, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeuten, wobei lineares oder verzweigtes C₁-C₁₀-Alkyl und Halogenatome bevorzugt sind und Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-Kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, OSiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
B eine Brücke zwischen den Indenylliganden bedeutet, die beispielsweise ein- bis viergliedrig sein kann, wobei ein- und zweigliedrige Brücken bevorzugt sind
enthaltend die Schritte:
a) Umsetzung eines substituierten Cyclopentadiens der Formel A mit einem 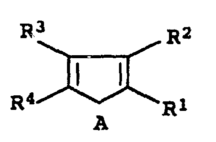 Verbrückungsreagenz BY₂ zu einem verbrückten Biscyclopentadienylligandsystem,
b) Umsetzung des verbrückten Biscyclopentadienylligandsystems mit einem Metallhalogenid zu einem Metallocen der Formel Ia 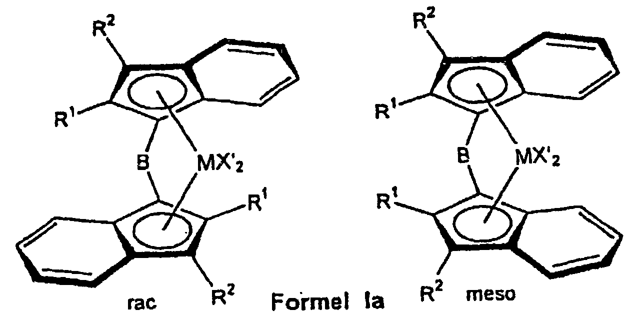 worin X' gleich Halogen ist,
c) Hydrierung des Metallocens der Formel Ia zu einem Metallocen der Formel Ib 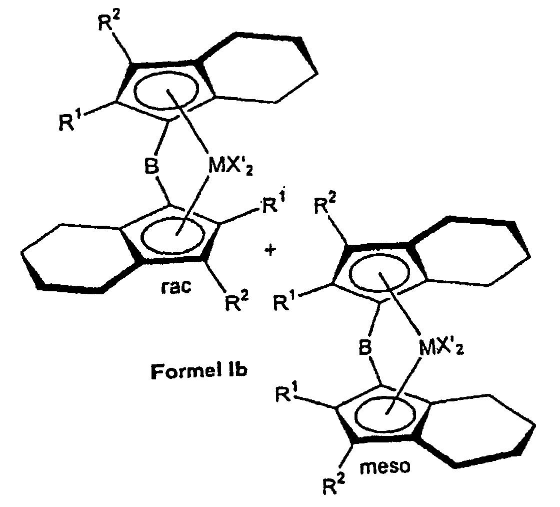
d) und optional die Umsetzung eines Metallocens der Formel Ib mit einer metallorganischen Verbindung R³M¹,
worin M¹ ein Element der 1.bis 3. Hauptgruppe ist und R³ ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe oder ein Pseudohalogen wie Nitril bedeutet,
zu einem Metallocen der Formel Ic 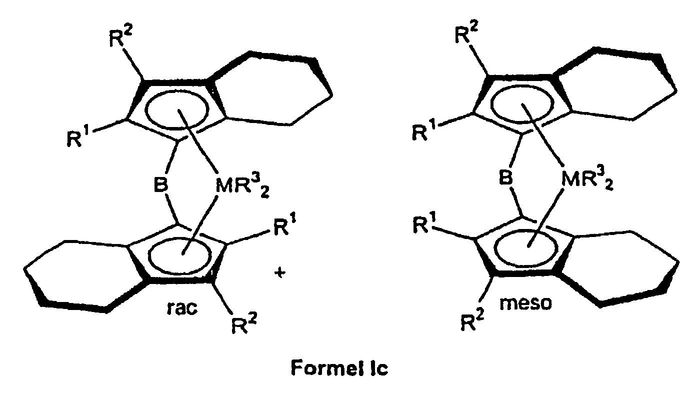 wobei alle Schritte im gleichen Lösungsmittel bzw. Lösungsmittelgemisch durchgeführt werden.

Gegenstand der Erfindung sind außerdem chirale rac/meso-Metallocene der Formel I mit einem rac/meso-Verhältnis von >20:1 bis <200:1 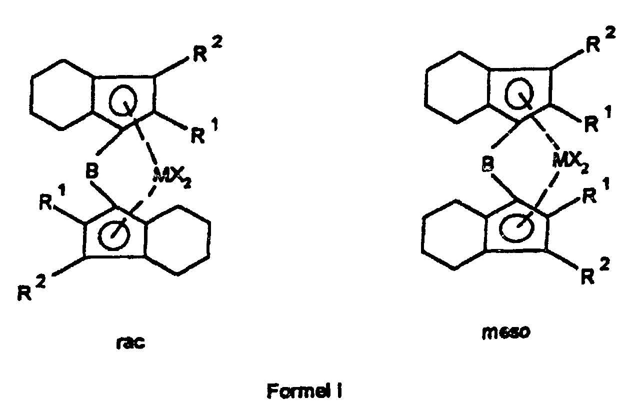 wobei
M ein Metall der Gruppen IIIb, IVb, Vb oder VIb des Periodensystems der Elemente bedeutet und bevorzugt ein Metall der Gruppe IVB wie Ti, Zr oder Hf, besonders bevorzugt Zr und Hf bedeutet,
die Reste X gleich sind und lineares oder verzweigtes C₁-C₁₀-Alkyl oder ein Halogenatom bedeuten, wobei Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-Kohlenstotffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, OSiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
B eine Brücke zwischen den Tetrahydro-Indenylliganden bedeutet, die beispielsweise ein- bis viergliedrig sein kann, wobei ein- und zweigliedrige Brücken bevorzugt sind.

Die Erfindung betrifft außerdem einen Katalysator, enthaltend a) mindestens ein chirales rac/meso-Metallocen der Formel I und b) mindestens einen Cokatalysator sowie die Verwendung des Katalysators zur Polymerisation von Olefinen bzw. in einem Verfahren zur Polymerisation von Olefinen.

In dem erfindungsgemäßen Verfahren wird zunächst das Ligandsystem hergestellt und ohne das verbrückte Bisindenylligandsystem zu isolieren das rac/meso-Metallocen der Formel Ia hergestellt, und anschließend zum Bis-Tetrahydroindenyl-Metallocen der Formel Ib hydriert. Das rac/meso-Metallocen der Formal Ib kann weiter zu dem rac/meso-Metallocen der Formel Ic umgesetzt werden.

Wie in Schema 1 illustriert, wird in dem Verfahren aus einem Inden der Formel A nach Deprotonierung mit einer starken Base wie beispielsweise Butyllithium oder Kaliumhydrid in einem geeigneten Lösungsmittel bzw. Lösungsmittelgemisch nach Zugabe eines Verbrückungsreagenzes BY₂ ein verbrücktes Bisindenylsystem hergestellt. Dabei ist B wie in Formel I definiert und Y ist eine Abgangsgruppe wie Halogen. Das verbrückte Bisindenylsystem wird nach weiterer Deprotonierung mit einer starken Base wie beispielsweise Butyllithium oder Kaliumhydrid mit einem Metallhalogenid der Gruppe IIIb, IVb, Vb oder VIb des Periodensystems der Elemente, bevorzugt mit den Halogeniden des Titans, Zirkoniums und Hafniums, besonders bevorzugt mit Zirkoniumtetrachlorid oder Hafniumtetrachlorid zum rac/meso-Metallocen der Formel Ia umgesetzt. Die Metallhalogenide können auch als ligandhaltige Komplexe eingesetzt werden wie beispielsweise HfCl₄(THF)₂, ZrCl₄(THF)₂, TiCl₄(THF)₂, TiCl₃(THF)₃, VCl₃(THF)₃ oder ScCl₃(THF)₃.

Die Brücke B wird durch Umsetzung des metallierten Indenyls mit einer Verbindung der Formel BY₂ eingeführt. Bei der Verbindung BY₂ handelt es sich bevorzugt um Verbindungen wie beispielsweise (CH₃)₂SiCl₂, (CH₃)(C₆H₅)SiCl₂, CH₂Br₂, (CH₃)₂CBr₂ oder 1,2-Dibromethan.

Zur Einführung einer C₁-Brücke kann alternativ auch das entsprechende Benzofulven mit einem Äquivalent des metallierten Indenyls umgesetzt werden. In diesen Fällen bedeutet B bevorzugt CH₂, C(CH₃)₂, C(CH₃)(C₆H₅) und C(C₆H₅)₂.

Geeignete Lösungsmittel für die Eintopf-Synthese sind aliphatische oder aromatische Lösungsmittel, wie beispielsweise Hexan oder Toluol, bevorzugt aromatische Lösungsmittel, oder etherische Lösungsmittel, wie beispielsweise Tetrahydrofuran (THF), Diethylether oder Dimethoxyethan (DME) sowie Lösungsmittelgemische aus oben genannten Lösungsmittelklassen wie beispielsweise Toluol/THF, Toluol/DME, Toluol/Hexan/THF oder Hexan/Diethylether.

Nach der Komplexsynthese kann sich die Isolierung des oben beschriebenen rac/meso-Metallocens der Formel Ia anschließen oder das rac/meso-Metallocen-enthaltende Reaktiongemisch wird direkt einer Hydrierung unterworfen.

Zur Isolierung des rac/meso-Metallocens der Formel Ia kann entweder das ausgefallene rac/meso-Metallocen zusammen mit dem entstandenen anorganischen Salz abfiltriert oder das rac/meso-Metallocen wird in einer ausreichenden Menge der bei der Metallocenynthese eingesetzten Lösungsmittel, bevorzugt einem aromatischen Lösungsmittel wie z. B. Toluol in Lösung gehalten und von dem entstandenen anorganischen Salz durch Filtration abgetrennt werden.

Das als Filterkuchen isolierte rac/meso-Metallocen wird gegebenenfalls gewaschen und getrocknet. Das rac/meso-Metallocen kann anschließend von salzartigen Bestandteilen abgetrennt werden. Das in Lösung vorliegende rac/meso-Metallocen wird gegebenenfalls vom Lösungsmittel befreit und als Feststoff isoliert. Das erhaltene rac/meso-Metallocen kann in reiner Form oder als Gemisch mit weiteren Bestandteilen, wie anorganischen Salzen erhalten werden.

Beispiele für die weiteren Bestandteile sind anorganische Salze wie LiCl, LiBr, NaCl, NaBr, KCl, KBr, MgCl₂, MgBr₂, MgBrCl, CaCl₂, AlCl₃ sowie Filterhilfsmittel wie Na₂SO₄, Quarzmehl und Celite. weitere Bestandteile können auch organische und metallorganische Nebenkomponenten sein. Organische Nebenkomponenten sind Lösungsmittelreste, organische Verunreinigungen aus den Edukten, nicht umgesetzte Edukte und nicht vollständig umgesetzte Intermediate der Metallocensynthese. Metallorganische Nebenkomponenten können isomere Metallocene, oligomere Metallocene und solche Verbindungen sein, die durch Verunreinigungen der Ausgangsverbindungen eingetragen wurden.

Das hergestellte rac/meso-Metallocen der Formel Ia läßt sich direkt zu dem entsprechenden Tetrahydroindenylderivat der Formel Ib umsetzten. Die Hydrierung des rac/meso-Metallocens der Formel Ia wird wie oben bereits beschrieben in einem aromatischen oder sauerstoffhaitigen aprotischen Lösungsmittel in Gegenwart von mindestens einem Hydrierkatalysator mit Wasserstoff durchgeführt.

Als aromatische Lösungsmittel werden Lösungsmittel bezeichnet, die mindestens einen aromatischen Sechsring pro Molekül enthalten. Beispiele für aromatische Lösungsmittel sind Benzol; Toluol, Xylol (als Isomerengemisch),

o-Xylol, m-Xylol, p-Xylol, Mesitylen, Tetralin, Anisol, Cumol, 1,2-Diethylbenzol, 1,3-Diethylbenzol, 1,4-Diethylbenzol, 1-Ethyl-2-methylbenzol, 1-Ethyl-3-methylbenzol, 1-Ethyl-4-methylbenzol. Bevorzugt sind Anisol, Toluol, Benzol, Xylole (als Gemisch oder Reinstoff) und Tetralin.

Zu den sauerstoffhaltigen aprotischen Lösungsmitteln zählen aromatische und aliphatische Ether wie Anisol, Ethylphenylether, Isopropylphenylether, Diethylether, Di-n-butylether, tert-Butylmethylether, Tetrahydrofuran, Dioxan. Daneben können auch Ester aliphatischer oder aromatischer Carbonsäuren als Lösungsmittel eingesetzt werden, beispielsweise Essigsäureethylester und Buttersäurepropylester.

Das beschriebene Verfahren bezieht sich auf einen Temperaturbereich von 0°C bis 150°C. Insbesondere wird die Hydrierung bei 15°C bis 100°C durchgeführt.

Als Hydrierkatalysatoren kommen solche Verbindungen oder Elemente in Frage, die unter den angewendeten Hydrierbedingungen das Lösungsmittel nicht oder nur teilweise hydrieren. Beispiele für solche Hydrierkatalysatoren sind Palladium auf Aktivkohle, Palladium auf Bariumsulfat, Palladium auf Aluminiumoxid, Palladiumschwarz, Palladiumschwamm, Platinoxid, Platinschwarz, Platinschwamm. Bevorzugt werden Palladiumkatalysatoren, insbesondere Palladium auf Aktivkohle.

Das oben hergestellte reine bzw. mit weiteren Bestandteilen vermischte hydrierte rac/meso-Metallocen der Formel Ib kann weiter mit einer metallorganischen Verbindung R³M¹ zum rac/meso-Metallocen der Formel Ic umgesetzt werden oder direkt als Katalysatorkomponente in der Polymerisation eingesetzt werden.

Bei der Verbindung R³M¹ ist M¹ ein Element der 1. bis 3. Hauptgruppe, bevorzugt Lithium, Magnesium oder Aluminium und R³ hat die gleiche Bedeutung wie X in Formel I, außer Halogen. Besonders bevorzugt sind, wenn das rac/meso-Metallocen der Formel Ia isolierbar sein soll, metallorganische Verbindungen, bei denen der Rest R³ kein aliphatisch gebundenes β-Wasserstoffatom trägt. Beispiele für solche Verbindungen sind Lithiumorganyle wie CH₃Li, BenzylLi und C₆H₅Li, sowie Grignardverbindungen wie CH₃MgCl, CH₃MgBr, CH₃MgI, BenzylMgBr, C₆H₅MgCl und Aluminiumorganyle wie Trimethylaluminium oder Methylaluminoxan.

Die Umsetzung erfolgt in einem gegenüber R³M¹ inerten Lösungsmittel bzw. Lösungsmittelgemisch. Geeignete Lösungsmittel sind aliphatische oder aromatische Lösungsmittel, wie beispielsweise Hexan oder Toluol, etherische Lösungsmittel, wie beispielsweise Tetrahydrofuran (THF), Diethylether oder Dimethoxyethan (DME) sowie Lösungsmittelgemische aus oben genannten Lösungsmittelklassen wie beispielsweise Toluol/THF, Toluol/Hexan/THF oder Hexan/Diethylether.

Die Substitution der Halogenatome am Übergangsmetall wird bei einer Temperatur von -100°C bis zum Siedepunkt des verwendeten Lösungsmittels bzw. -gemisches, bevorzugt bei einer Temperatur von -78°C bis zum Siedepunkt des verwendeten Lösungsmittels bzw. -gemisches durchgeführt.

Nach erfolgter Umsetzung kann das rac/meso-Metallocen der Formel Ib beispielsweise durch Extraktion vom entstandenen Metallhalogenid abgetrennt und durch Kristallisation gewonnen werden, wobei sich das rac/meso-Verhältnis im Vergleich zum Ausgangsmaterial verändern kann.

Rac/meso-Metallocene des Typs silylverbrückte Bis-tetrahydroindenyl-Komplexe des Hafniums oder Zirkoniums werden bevorzugt folgendermaßen hergestellt. 1 Äquivalent Inden wird bei Raumtemperatur bis 50°C in einem Toluol/THF-Gemisch 100:1 bis 1:5, bevorzugt 20:1 bis 2:1 mit einer Lösung von n-Butyllithium (bevorzugt 1 Äquivalent) deprotoniert und anschließend bei -30°C bis Raumtemperatur mit einem halben Äquivalent eines alkyl- und/oder aryl-substituierten Dichlorsilans, wie z. B. Dimethyldichlorsilan, versetzt und 1 bis 5 Stunden bei einer Temperatur zwischen Raumtemperatur und 60°C nachgerührt. Anschließend wird mit einem weiteren Äquivalent Butyllithium bei Raumtemperatur bis 50°C deprotoniert, 1 bis 5 Stunden bei Raumtemperatur bis 50°C nachgerührt und bei einer Temperatur von -30°C bis 50°C, bevorzugt -10°C bis Raumtemperatur, mit 0,4 bis 1 Äquivalent, bevorzugt 0,45 bis 0,75 Äquivalenten des Tetrachlorids von Zirkonium oder Hafnium umgesetzt und anschließend 1 bis 5 Stunden nachgerührt. Im Falle von Dimethylsilyl-bis-indenylzirkoniumdichlorid wird die Komplexsuspension aus der Eintopfsynthese filtriert und mit Toluol oder THF, bevorzugt THF gewaschen. Der Filterkuchen, der rac/meso Dimethylsilyl-bisindenylzirkoniumdichlorid enthält, wird in Toluol suspendiert, mit Palladium auf Kohle versetzt und bei einer Temperatur von 20°C bis 120°C, bevorzugt 50°C bis 90°C und einem Wasserstoffdruck von 5 bis 100 bar, bevorzugt 10 bis 50 bar hydriert. Rac/meso Dimethylsilyl-bis(tetrahydro-indenyl)-zirkoniumdichlorid wird durch Toluolextraktion von anorganischen Nebenprodukten abgetrennt und nach Entfernen eines Großteils des Lösungsmittels als Feststoff isoliert.

Das neue Verfahren hat überraschenderweise viele Vorteile. Die Ligandsynthese und die Komplexsynthese zum rac/meso-Metallocen der Formel Ia werden im selben Reaktionsgefäß durchgeführt und weiterhin können bei der Komplexsynthese die gleichen nichtchlorierten Lösungsmittel eingesetzt werden, die bei der anschließenden Hydrierung zu einem rac/meso-Metallocen der Formel Ib und die bei der Substitution der Halogenatome X' am Übergangsmetall M zu einem rac/meso-Metallocen der Formel Ic verwendet werden können.

Durch Verwendung nichtchlorierter Lösungsmittel können wirksamere Hydrierkatalysatoren eingesetzt und die Reaktionen bereits bei relativ niedrigen Wasserstoffdrücken durchgeführt werden. Das ist besonders für technische Anwendungen interessant. Man vermeidet die unter Sicherheits- und Umweltaspekten bedenklichen chlorierten Lösungsmittel. Durch Verwendung von aromatischen Kohlenwasserstoffen oder leicht polaren aprotischen Lösungsmitteln wie Ether wird die anschließende Aufarbeitung der Metallocene erleichtert. Bei den bevorzugten Lösungsmitteln wie Anisol, Toluol, Benzol, Xylol, tert.-Butylmethylether und Tetrahydrofuran kann das Produkt bei erhöhter Temperatur vollständig gelöst, der Hydrierkatalysator und anorganische salzartige Nebenprodukte abgetrennt und das Produkt kristallisiert werden oder die Lösung dann direkt als Katalysatorkomponente in die Polymerisation eingesetzt werden. Durch die gute Löslichkeit der hydrierten Produkte in aromatischen Lösungsmitteln bei erhöhter Temperatur ist die Hydrierung sehr konzentrierter Metallocensuspensionen möglich, was im Hinblick auf eine gute Raum-Zeit-Ausbeute von Vorteil ist. Außerdem sind, verglichen mit bekannten Verfahren, die benötigten Mengen an Hydrierkatalysator wesentlich preiswerter.

Die vorliegende Erfindung wird anhand der nachfolgenden Beispiele näher erläutert.

Die im erfindungsgemäßen Verfahren hergestellten rac/meso-Metallocene sind Verbindungen der Formel I in einem rac/meso-Verhältnis von > 20:1 bis < 200:1, bevorzugt > 30:1 bis < 100:1, besonders bevorzugt von > 35:1 bis < 60:1, ganz besonders bevorzugt > 40:1 bis < 50:1. 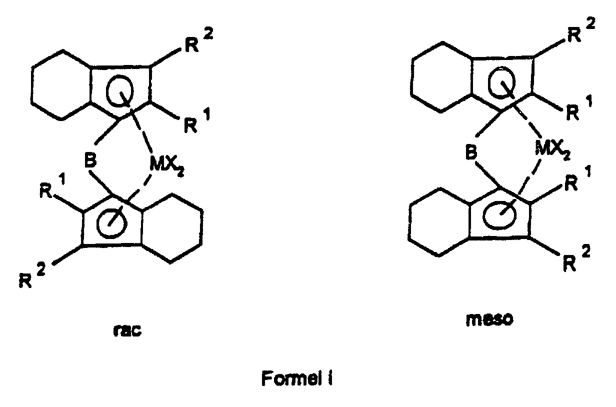 wobei
M ein Metall der Gruppen IIIb, IVb, Vb oder VIb des Periodensystems der Elemente bedeutet und bevorzugt ein Metall der Gruppe IVb wie Ti, Zr oder Hf, besonders bevorzugt Zr und Hf bedeutet,
die Reste X gleich oder verschieden sind, bevorzugt gleich, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkenyl-, C₇-C₄₀-Alkylaryl- oder C₈-C₄₀-Arylalkenylgruppe, eine -OH-Gruppe, ein Halogenatom oder ein Pseudohalogen wie Nitril bedeuten, wobei lineares oder verzweigtes C₁-C₁₀-Alkyl und Halogenatome bevorzugt sind und Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
B eine Brücke zwischen den Indenylliganden bedeutet, die beispielsweise ein- bis viergliedrig sein kann, wobei ein- und zweigliedrige Brücken bevorzugt sind.

Beispiele für solche Brücken sind 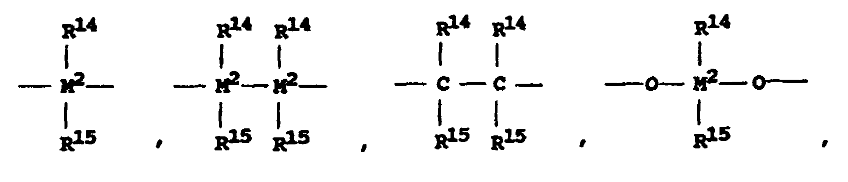 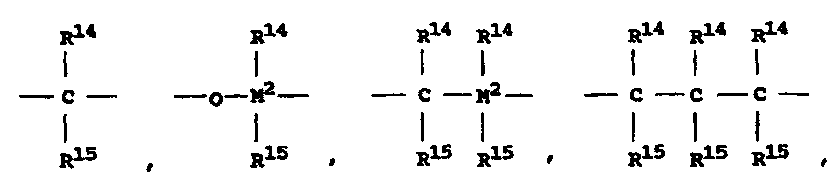 =BR¹⁴, =AlR¹⁴, -Ge-, -O-, -S-, =SO, =SO₂, =NR¹⁴, =CC, =PR¹⁴ oder =P(O)R¹⁴ ist, wobei R¹⁴ und R¹⁵ gleich oder verscheiden sind und ein Wasserstoffatom, ein Halogenatom oder eine C₁-C₄₀-kohlenwasserstoffhaltige Gruppe ist wie eine C₁-C₁₀-, insbesondere C₁-C₄-Alkylgruppe, eine C₁-C₁₀-Fluoralkyl-, insbesondere CF₃-Gruppe, eine C₆-C₁₀-, insbesondere C₆-C₈-Aryl-, eine C₆-C₁₀-Fluoraryl-, insbesondere Pentafluorphenylgruppe, eine C₁-C₁₀-, insbesondere C₁-C₄-Alkoxygruppe, insbesondere Methoxygruppe, eine C₂-C₁₀-, insbesondere C₂-C₄-Alkenylgruppe, eine C₇-C₄₀-, insbesondere C₇-C₁₀-Arylalkylgruppe, eine C₈-C₄₀-, insbesondere C₈-C₁₂-Arylalkenylgruppe, eine C₇-C₄₀-, insbesondere C₇-C₁₂-Alkylarylgruppe bedeuten oder R¹⁴ und R¹⁵ jeweils mit den sie verbindenden Atomen einen Ring bilden und M² Silizium, Germanium oder Zinn ist.

Die Brücke B bedeutet bevorzugt 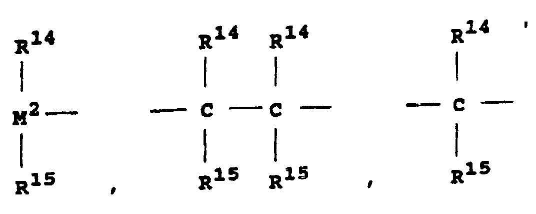 wobei M² Silizium oder Germanium ist und R¹⁴ und R¹⁵ gleich oder verschieden sind und eine C₁-C₄-Alkylgruppe oder eine C₆-C₁₀-Arylgruppe bedeuten.

R¹⁴ und R¹⁵ sind gleich oder verschieden und bedeuten bevorzugt Wasserstoff, eine C₁-C₄-Alkylgruppe, insbesondere Methylgruppe, CF₃-Gruppe, C₆-C₈-Aryl-, Pentafluorphenylgruppe, C₁-C₁₀-, C₁-C₄-Alkoxygruppe, inbesondere Methoxygruppe, C₂-C₄-Alkenylgruppe, C₇-C₁₀-Arylalkylgruppe, C₈-C₁₂-Arylalkenylgruppe, C₇-C₁₂-Alkylarylgruppe.

Besonders bevorzugt ist B eine Brücke R¹⁴R¹⁵C=, R¹⁴R¹⁵Si= oder - CR¹⁴R¹⁵-CR¹⁴R¹⁵-, wobei R¹⁴ und R¹⁵ gleich oder verschieden sind und ein Wasserstoffatom, eine C₁-C₄-Alkylgruppe oder eine C₆-C₁₀-Arylgruppe bedeuten.

Die besonders bevorzugten rac/meso-Metallocene der Formel I weisen Kombinationen folgender Molekülfragmente auf:
- B:: -CH₂-CH₂-, (H₃C)₂Si- oder (H₃C)₂C=, bevorzugt (H₃C)₂Si=
- MX₂:: -ZrCl₂, -HfCl₂, -Zr(CH₃)₂, -Hf(CH₃)₂
- Ligand:: Tetrahydroindenyl

Beispiele für rac/meso-Metallocene der Formel I sind nachfolgend genannt:
rac/meso-Dimethylsilandiylbis(4,5,6,7-tetrahydro-1-indenyl)zirkondichlorid
rac/meso-Dimethylmethylenbis(4,5,6,7-tetrahydro-1-indenyl)zirkondichlorid
rac/meso-Ethandiylbis(4,5,6,7-tetrahydro-1-indenyl)zirkondichlorid
rac/meso-Dimethylsilandiylbis(4,5,6,7-tetrahydro-1-indenyl)zirkondimethyl
rac/meso-Dimethylmethylenbis(4,5,6,7-tetrahydro-1-indenyl)zirkondimethyl
rac/meso-Ethandiylbis(4,5,6,7-tetrahydro-1-indenyl)zirkondimethyl
rac/meso-Dimethylsilandiylbis(4,5,6,7-tetrahydro-1-indenyl)hafniumdichlorid
rac/meso-Dimethylmethylenbis(4,5,6,7-tetrahydro-1-indenyl)hafniumdichlorid
rac/meso-Ethandiylbis(4,5,6,7-tetrahydro-1-indenyl)hafniumdichlorid
rac/meso-Dimethylsilandiylbis(4,5,6,7-tetrahydro-1-indenyl)hafniumdimethyl
rac/meso-Dimethylmethylenbis(4,5,6,7-tetrahydro-1-indenyl)hafniumdimethyl
rac/meso-Ethandiylbis(4,5,6,7-tetrahydro-1-indenyl)hafniumdimethyl

rac/meso-Dimethylsilandiylbis(2-alkyl-4,5,6,7-tetrahydro-1-indenyl)zirkondichlorid
rac/meso-Dimethylmethylenbis(2-alkyl-4,5,6,7-tetrahydro-1-indenyl)zirkondichlorid
rac/meso-Ethandiylbis(2-alkyl-4,5,6,7-tetrahydro-1-indenyl)zirkondichlorid
rac/meso-Dimethylsilandiylbis(2-alkyl-4,5,6,7-tetrahydro-1-indenyl) zirkondimethyl
rac/meso-Dimethylmethylenbis(2-alkyl-4,5,6,7-tetrahydro-1-indenyl)zirkondimethyl
rac/meso-Ethandiylbis(2-alkyl-4,5,6,7-tetrahydro-1-indenyl)zirkondimethyl
rac/meso-Dimethylsilandiylbis(2-alkyl-4,5,6,7-tetrahydro-1-indenyl)hafniumdichlorid
rac/meso-Dimethylmethylenbis(2-alkyl-4,5,6,7-tetrahydro-1-indenyl)hafniumdichlorid
rac/meso-Ethandiylbis(2-alkyl-4,5,6,7-tetrahydro-1-indenyl)hafniumdichlorid
rac/meso-Dimethylsilandiylbis(2-alkyl-4,5,6,7-tetrahydro-1-indenyl)hafniumdimethyl
rac/meso-Dimethylmethylenbis(2-alkyl-4,5,6,7-tetrahydro-1-indenyl)hafniumdimethyl
rac/meso-Ethandiylbis(2-alkyl-4,5,6,7-tetrahydro-1-indenyl)hafniumdimethyl

Bei den obengenannten rac/meso-Metallocenen beträgt das rac/meso-Verhältnis bevorzugt > 30:1 bis < 100:1, besonders bevorzugt > 35:1 bis < 60:1, ganz besonders bevorzugt > 40:1 bis < 50:1 und Alkyl bedeutet lineares oder verzweigtes C₁-C₁₀-Alkyl bedeutet wie Methyl, Ethyl, Propyl, Isopropyl, n-Butyl, Isobutyl, tert.-Butyl, Pentyl, Isopentyl, Hexyl oder Decyl.

Die erfindungsgemäßen rac/meso-Metallocene können überraschenderweise direkt als Katalysatorkomponente zur Herstellung hochisotaktischer Polyolefine eingesetzt werden, ohne daß eine Isolierung der rac-Form notwendig ist. Ein solches Katalysatorsystem enthält mindestens einen Cokatalysator und mindestens ein rac/meso-Metallocen. Es können auch Metallocen-Mischungen verwendet werden, z.B. Mischungen von zwei oder mehr rac/meso-Metallocenen der Formel I oder Mischungen eines oder mehrerer rac/meso-Metallocene der Formel I mit einem oder mehreren davon verschiedenen Metallocenen wie einem Bisindenyl-Metallocen, das im Sechsring des Indenylliganden substituiert ist. Solche sechsringsubstituierten Metallocene sind z.B. in EP-A-0 646 604 beschrieben. Darüberhinaus kann das rac/meso-Metallocen auch in geträgerter Form zur Olefinpolymerisation eingesetzt werden.

Die Cokatalysatorkomponente, die im Katalysatorsystem enthalten sein kann, enthält mindestens eine Verbindung vom Typ eines Aluminoxans oder einer anderen Lewis-Säure oder eine ionische nichtkoordinierende Verbindung, die durch Reaktion mit einem Metallocen dieses in eine kationische Verbindung überführt. Als Aluminoxan wird bevorzugt eine Verbindung der allgemeinen Formel II

(R- AlO)p (II)

verwendet. Aluminoxane können cyclisch wie in Formel III 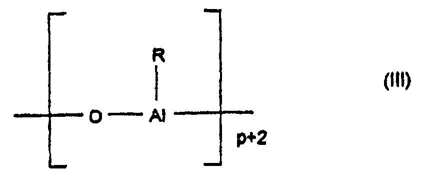 oder linear wie in Formel IV 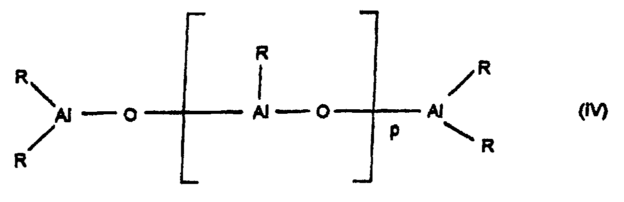 oder vom Cluster-Typ wie in Formel V sein, wie sie in neuerer Literatur beschrieben werden, vgl. JACS 117 (1995), 6465-74, Organometallics 13 (1994), 2957-1969.

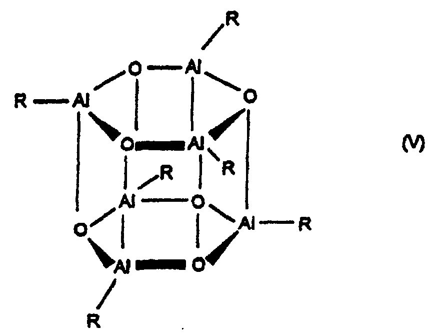

Die Reste R in den Formeln (II), (III), (IV) und (V) können gleich oder verschieden sein und eine C₁-C₂₀-Kohlenwasserstoffgruppe wie eine C₁-C₁₀-Alkylgruppe, eine C₆-C₂₀-Arylgruppe, oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Eutyl, wobei Wasserstoff oder Isobutyl oder n-Butyl bevorzugt zu 0,01 bis 40 % (Zahl der Reste R) enthalten sind.

Das Aluminoxan kann auf verschiedene Arten hergestellt werden. Nach einer bekannten Methoden wird eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel, wie Toluol, umgesetzt. Zur Herstellung eines Aluminoxans mit verschiedenen Alkylgruppen R werden entsprechend der gewünschten Zusammensetzung und Reaktivität zwei verschiedene Aluminiumtrialkyle (AlR₃ + AlR'₃) mit Wasser umgesetzt (vgl. S. Pasynkiewicz, Polyhedron 9 (1990) 429 und EP-A-302 424).

Unabhängig von der Art der Herstellung ist allen Aluminoxanlösungen ein wechselnder Gehalt an nicht umgesetzter Aluminiumausgangsverbindung, die in freier From oder als Addukt vorliegt, gemeinsam.

Als Lewis-Säure werden außer Aluminoxan z.B. auch andere aluminiumorganische Verbindungen oder bororganische Verbindungen verstanden, die C₁-C₂₀-kohlenstoffhaltige Gruppen enthalten, wie verzweigtes oder unverzweigtes Alkyl- oder Halogenalkyl, wie Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorphenyl, 3,5-Difluorophenyl, Pentachlorphenyl, Pentafluorophenyl, 3,4,5-Trifluorophenyl und 3,5-Di(trifluoromethyl)phenyl.

Besonders bevorzugt sind bororganische Verbindungen. Beispiele für solche bororganische Verbindungen sind Trifluorboran, Triphenylboran, Tris(4-fluorophenyl)boran,Tris(3,5-difluorophenyl)boran, Tris(4-fluorophenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran.
Besonders bevorzugt ist Tris(pentafluorophenyl)boran.

Als ionische nichtkoordinierende Cokatalysatoren werden z.B. Verbindungen verstanden, die ein nicht koordinierendes Anion enthalten, wie Tetrakis(pentafluorophenyl)borate, Tetraphenylborate, SbF₆-, CF₃SO₃- oder ClO₄-. Als kationisches Gegenion werden Lewis-Säuren wie Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromο-N,N-dimethylanilin, p-Nitro-N,N-dimethylanilin, Triethylphosphin, Triphenylphosphin, Diphenylphosphin, Tetrahydrothiophen oder Triphenylcarbenium eingesetzt.

Beispiele für solche ionischen Verbindungen sind
Triethylammoniumtetra(phenyl)borat, Tributylammoniumtetra(phenyl)borat,
Trimethylammoniumtetra(phenyl)borat, Tributylammoniumtetra(tolyl)borat,
Tributylammoniumtetra(pentafluorophenyl)borat,
Tributylammoniumtetra(pentaf luorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylanilintetra(phenyl)borat, N,N-Diethylaniliniumtetra(phenyl)borat,
N,N-dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie 7,8-Dicarbaundecarboran(13),
Undecahydrid-7,8-dimethyl-dicarbaundecaboran,
Dodecahydrid-1-phenyl-1,3-dicarbonaboran,
Tri(butyl)ammoniumdecahydrid-8-ethyl-7,9-dicarbaundecaborat,
4-Carbanonaboran(14)Bis(tri(butyl)ammonium)nonaborat, Bis(tri(butyl)ammonium)undecaborat, Bis(tri(butyl)ammonium)dodecaborat,
Bis(tri(butyl)ammonium)decachlorodecaborat,
Tri(butyl)ammonium-1-carbadecaborate, Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III)
von Bedeutung.

Das rac/meso-Metallocen/Cokatalysatorsystem kann ungeträgert oder bevorzugt auch geträgert in der Olefinpolymerisation eingesetzt werden.

Die Trägerkomponente des erfindungsgemäßen Katalysatorsystems kann ein beliebiger organischer oder anorganischer, inerter Feststoff sein, insbesondere ein poröser Träger wie Talk, anorganischer Oxide oder feinteilige Polymerpulver, wie Polyolefine.

Geeignet sind anorganische Oxide von Elementen der Gruppen 2,3, 4, 5, 13, 14, 15 und 16 das Periodensystem der Elemente. Beispiele für als Träger bevorzugte Oxide umfasssen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden kölnnen, sind MgO, ZrO₂ oder B₂O₃, um nur einige zu nennen.

Die verwendeten Trägermaterialien weisen eine spezfische Oberfläche im Bereich von 10 m²/g bis 1000 m²/g, ein Porenvolumen im Bereich von 0,1 ml/g bis 5 ml/g und eine mittlere Partikelgröße von 1 µm bis 500 µm auf. Bevorzugt sind Träger mit einer spezfischen Oberfläche im Bereich von 50 µm bis 500 µm, einem Porenvolumen im Bereich zwischen 0,5 ml/g und 3,5 ml/g und einer mittleren Partikelgröße im Bereich von 5 µm bis 350 µm. Besonders bevorzugt sind Träger mit einer spezifischen Oberfläche im Bereich von 200 m²/g bis 400 m²/g, einem Porenvolumen im Bereich zwischen 0,8 ml/g bis 3,0 ml/g und einer mittleren Partikelgröße von 10 µm bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Der Gewichtsverlust beim Glühen (LOI = Loss on ignition) sollte 1 % oder weniger betragen. Die thermische Dehydratisierung oder Trocknung des Trägermaterials kann unter Vakuum und gleichzeitiger Inertgasüberlagerung, wie Stickstoff, erfolgen.

Die Trocknungstemperatur liegt im Bereich zwischen 100°C und 1000°C, vorzugsweise zwischen 200°C und 800°C. Der Parameter Druck ist in diesem Fall nicht entscheidend. Die Dauer des Trocknungsprozessess kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

10 Eine Dehydratisierung oder Trocknung des Trägermaterials ist auch auf chemischen Wege möglich, indem das adsorbierte Wasser und die Hydroxylgruppe auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium-, Bor und Magnesium wie Trimethylaluminium, Triethylaluminium, Triisobutylaluminium, Triethylboran, Dibutylmagnesium oder auch Aluminoxan wie Methylaluminoxan. Die chemische Dehydratisierung oder Inertisierung des Trägermaterials kann dadurch erfolgen, daß man unter Luft- und Feuchtigkeitsausschluß eine Suspension des Trägermaterials in einem geeigenten Lösemittel mit dem Inertisierungsreagenz in reiner Form oder gelöst in einem geeigneten Lösemittel zur Reaktion bringt. Geeignete Lösemittel sind aliphatische oder aromatische Kohlenwasserstoff, wie Pentan, Hexan, Heptan, Toluol oder Xylol. Die Inertisierung erfolgt bei Temperaturen zwischen 25°C und 120°C, bevorzugt zwischen 50°C und 70°C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver, wie Polyethylen, Polypropylen oder Polystyrol, können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems kann beispielsweise mindestens eine der oben beschriebenen rac/meso-Metallocen-Komponenten in einem geeigneten Lösemittel mit der Cokatalysatorkomponente in Kontakt gebracht, um ein lösliches Reak-tionsprodukt zu erhalten. Das lösliche Reaktionsprodukt wird dann zum dehydratisierten oder inertisierten Trägermaterial gegeben, das Lösemittel entfernt und das resultierende geträgerte rac/meso-Metallocen-Katalysatorsystem getrocknet, um sicherzustellen, daß das Lösemittel vollständig oder zum größen Teil aus den Poren des Trägermaterials entfernt wird. Der geträgerte Katalysator wird als frei fließendes Pulver erhalten.

Alternativ zu oben beschriebenen Trägerungsverfahren sind auch andere Zugabereihenfolgen von rac/meso-Metallocenen, Cokatalysatoren und Träger möglich.

Ein bevorzugtes Verfahren zur Darstellung eines frei fließenden und gegebenenfalls vorpolymerisierten geträgerten Katalysatorsystems umfaßt die folgende Schritte
a) Herstellung einer rac/meso-Metallocene/Cokatalysator-Mischung in einem geeigenten Lösemittel (Voraktivierung), wobei die rac/meso-Metallocen-Komponente eine der zuvor beschriebenen Strukturen besitzt.
b) Aufbringen der voraktivierten rac/meso-Metallocen/Cokatalysatorlösung auf einen porösen, im allgemeinen anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der voraktivierten rac/meso-Metallocen-Cokatalysator-Mischung sind Kohlenwasserstoff und Kohlenwasserstoffgemische, die bei der gewählten Reaktionstemperatur flüssig und in denen sich die Einzelkomponente bevorzugt lösen. Die Löslichkeit der Einzelkomponenten ist aber keine Voraussetzung, wenn sichergestellt ist, daß das Reaktionsprodukt aus rac/meso-Metallocen- und Cokatalysatorkomponente in dem gewählten Lösemittel löslich ist. Beispiele für geeignete Lösemittel umfassen Alkane wie Pentan, Isopentan, Hexan, Heptan, Octan, und Nonan, Cycloalkane wie Cyclopentan und Cyclohexan, und Aromaten wie Benzol, Toluol, Ethylbenzol und Diethylbenzol. Ganz besonders bevorzugt ist Toluol.

Die bei der Präparation des geträgerten Katalysatorsystems eingesetzten Mengen an Cokatalysator wie Aluminoxan und rac/meso-Metallocen können über einen weiten Bereich variiert werden. Bevorzugt wird im Falle von Aluminoxan ein molares Verhältnis von Aluminium zum Übergangsmetall im rac/meso-Metallocen von 10:1 bis 1000:1 eingestellt, ganz besonders bevorzugt ein Verhältnis von 50:1 bis 500:1. Im Fall von Methylaluminoxan werden bevorzugt 30%ige toluolische Lösungen eingesetzt, die Verwendung von 10%-igen Lösungen ist aber auch möglich.

Das erfindungsgemäße rac/meso-Metallocen kann voraktiviert werden. Zur Voraktivierung kann das rac/meso-Metallocen in Form eines Feststoffes in einer Lösung des Cokatalysators wie Aluminoxan in einem geeigneten Lösemittel aufgelöst. Es ist auch möglich, das rac/meso-Metallocen getrennt in einem geeigneten Lösemittel aufzulösen und diese Lösung anschließend mit der Cokatalysator-Lösung wie Aluminoxan-Lösung zu vereinigen. Es ist ebenfalls möglich, das in der Metallocensynthese erhaltene rac/meso-metallocenhaltige Reaktionsgemisch mit der Cokatalysatorlösung, z.B. Aluminoxanlösung zu vereinigen. Bevorzugt wird Toluol verwendet. Die Voraktivierungszeit kann ungefähr 1 Minute bis 200 Stunden betragen. Die Voraktivierung kann bei Raumtemperatur (25°C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50°C und 100°C.

Die voraktivierte Lösung kann anschließend mit einem inerten Trägermaterial, üblicherweise Kieselgel, das in Form eines trokkenen Pulvers oder als Suspension in einem der oben genannten Lösemittel vorliegt, vereinigt werden. Bevorzugt wird das Kieselgel als Pulver eingesetzt. Die Reihenfolge der Zugabe ist dabei beliebig. Die voraktivierte Metallocen-Cokatalysator-Lösung kann zum vorgelegten Trägermaterial dosiert, oder aber das Trägermaterial in die vorgelegte Lösung eingetragen werden.

Das Volumen der voraktivierten Lösung kann 100 % des Gesamtporenvolumens des eingesetzten Trägermaterials überschreiten oder aber bis zu 100 % des Gesamtporenvolumens betragen. Bevorzugt ist dabei ein Bereich von 100 bis 500 %, besonders bevorzugt 110 bis 300 % des Gesamtporenvolumens oder aber 50 % bis 100 % bwz. bevorzugt 70 bis 95 %.

Die Temperatur, bei der die voraktivierte Lösung mit dem Trägermaterial in Kontakt gebracht wird, kann im Bereich zwischen 0°C und 100°C variieren. Niedrigere oder höhere Temperaturen sind aber auch möglich. Nach der Vereinigung von Trägermaterial und Lösung wird die Mischung noch etwa 1 Minute bis 1 Stunde, bevorzugt 5 Mimten bei dieser Temperatur gehalten.

Anschließend wird das Lösemittel vollständig oder zum größen Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungvorgang kann die Mischung erwärmt werden, bis das freie Lösemittel entfernt worden ist, was üblicherweise 1 bis 3 Stunden bei einer vorzugsweise gewählten Temperatur zwischen 30°C und 60°C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoffrest wie Pentan oder Hexan gewaschen und erneut getrocknet werden.

Das geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Dazu wird beispielsweise das geträgerte Katalysatorsystem in einem inerten Kohlenwasserstoff wie etwa Hexan suspendiert und bei einer Temperatur von 0°C bis 60°C in Gegenwart von mindestens einem Olefin wie beispielsweise Ethylen, Propylen, Hexen, Buten oder 4-Methyl-1-penten vorpolymersiert. Anschließend kann das vorpolymerisierte Katalysatorsystem bis zur Rieselfähigkeit getrocknet werden. Alternativ kann diese Suspension auch direkt für die Polymerisation verwendet werden. Eine weitere mögliche Ausgestaltungsvariante besteht darin, das Katalysatorsystem in der Gasphase vorzupolymerisieren. Dazu wird unter Rührung mindestens ein Olefin obiger Bedeutung durch das in Pulverform vorliegende Katalysatorsystem geleitet.

Als Additiv kann während oder nach der Herstellung des geträgerten Katalysatorsystems eine geringe Menge eines a-Olefins, wie Styrol, als aktivitätssteigernde Komponente oder eines Antistatikums, zugesetzt werden.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems enthaltend mindestens ein rac/meso- Metallocen der Formel I. Unter dem Begriff Polymerisation wird eine Homopolymerisation wie auch eine Copolymerisation verstanden.

Das geträgerte Katalysatorsystem kann für die Polymerisation von Olefinen in Kombination mit einem Aluminiumalkyl oder einem Aluminoxan als Scavenger eingesetzt werden. Die löslichen Aluminiumkomponenten werden dem Monomeren zugesetzt und dienen zur Reinigung des Monomeren von Substanzen, die die Katalysatoraktivität beeinträchtigen können. Die Menge der zugesetzten Aluminiumkomponente hängt von der Qualität der eingesetzten Monomere ab.

Bevorzugt werden Olefine der Formel R^{a}-CH=CH-R^{b} polymerisiert, worin R^{a} und R^{b} gleich oder verschieden sind und ein Wasserstoffatom oder einen kohlenstoffhaltigen Rest mit 1 bis 20 C-Atomen, insbesondere 1 bis 10 C-Atome, bedeuten, und R^{a} und R^{b} zusammen mit den sie verbindenden Atomen einen oder mehrere Ringe bilden kön-nen.

Beispiele für solche Olefine sind 1-Olefine mit 2 bis 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbornen oder Ethylnorbornadien, copolymerisiert. Beispiele solcher Copolymere sind Ethylen/Propen-Copolymere oder Ethen/Propen/1,4-Hexadien-Terpolymere.

Die Polymerisation wird bei einer Temperatur von -60°C bis 300°C. bevorzugt 50°C bis 200°C, ganz besonders 50°C bis 80°C durchgeführt. Der Druck beträgt 0,5 bar bis 2000 bar, bevorzugt 5 bar bis 64 bar.

Die Polymerisation kann in Lösung, in Masse, in Suspension oder in der Gasphase kontinuierlich oder diskontinuierlich, ein- oder mehrstufig durchgeführt werden.

Als Molmassenregler und/oder zur Steigerung der Aktivität wird, falls erforderlich, Wasserstoff zugegeben.

Die mit dem erfindungsgemäßen Katalysatorsystem hergestellten Polymere zeigen eine gleichmäßige Kornmorphologie und weisen keine Feinkornanteile auf. Bei der Polymerisation mit dem erfindungsgemäßen Katalysatorsystem treten keine Beläge oder Verbackungen auf.

Mit dem erfindungsgemäßen Katalysatorsystem können hochisotaktische Polyolefine, wie Polypropylen mit hoher Stereo- und Regiospezifität erhalten werden.

Die Erfindung wird anhand der nachfolgenden Beispiele näher erläutert.

Alle Glasgeräte wurden im Vakuum ausgeheizt und mit Argon gespült. Alle Operationen wurdenunter Ausschluß von Feuchtigkeit und Sauerstoff in Schlenkgefäßen durchgeführt. Die verwendeten Lösemittel wurden unter Argon jeweils frisch über Na/K-Legierung destilliert und in Schlenkgefäßen aufbewahrt.

Es bedeuten:
- VZ =: Viskositätszahl in cm³/g
- M_{w} =: Molmassengewichtmittel in g/mol (ermittelt durch Gelpermeationschromatographie)
- M_{w}/Mₙ =: Molmassendispersität
- Schmp. =: Schmelzpunkt in °C (ermittelt mit DSC, 20°C/min. Aufheiz/Abkühlgeschwindigkeit
- II =: Isotaktischer Index (II = mm+ 0,5 mr)
- nᵢₛₒ =: Isotaktische Blocklänge (nᵢₛₒ = 1 + [2 mm/mr])
II und nᵢₛₒ ermittelt durch ¹³C-NMR-Spektroskopie
Bestimmung des rac:meso-Verhältnisse mittels 1H-NMR

### Synthese von rac/meso-Metallocenen

### Beispiel A

### rac/meso-Dimethylsilandiylbis(4, 5, 6, 7 -tetrahydro-1-indenyl)zirkoniumdichlorid (1)

Eine Lösung von 50 g (387 mmol) Inden (90%ig) in 320 ml Toluol und 48 ml THF wurde bei Raumtemperatur mit 150 ml (400 mmol) einer 20% Lösung von Butyllithium in Toluol versetzt und für eine Stunde bei Raumtemperatur nachgerührt. Anschließend wurde die Suspension auf -10°C gekühlt und mit 23.5 ml (200 mmol) Dimethyldichlorsilan versetzt. Nach einer einstündigen Nachrührzeit wurden 150 ml (400 mmol) einer 20% Lösung von Butyllithium in Toluol zugegeben, und das Reaktionsgemisch wurde 1 Stunde nachgerührt. 46 g (197 mmol) Zirkoniumtetrachlorid wurden zum Reaktionsgemisch gegeben die orange Suspension 2 Stunden bei Raumtemperatur nachgerührt, filtriert und mit 100 ml THF nachgewaschen. Der Filterkuchen von rac/meso-Dimethylsilandiylbisindenylzirkoniumdichlorid wurde in 500 ml Toluol zusammen mit 1.5 g (1.4 mmol) Palladium (10% auf Aktivkohle) suspendiert und bei 70°C und einem Wasserstoffdruck von 20 bar hydriert. Nach 5 Stunden wurde die Reaktionsmischung heiß filtriert , auf die Hälfte eingeengt und bei 0 - 5°C kristallisiert. Es wurden 35.3 g (39% bezogen auf Inden) rac/meso-Dimethyl-silandiylbis(4, 5, 6, 7 -tetrahydro-1-indenyl)zirkoniumdichlorid (1) (rac/meso 38 : 1) erhalten.

### Polymerisationsbeispiele

### Beispiel 1

Ein trockener 24 dm³-Reaktor wurde mit Propylen gespült und mit 12 dm³ flüssigem Propylen und 25 cm³ toluolischer Methylaluminoxanlösung (entsprechend 37 mmol A1 , mittlerer Oligomerisierungsgrad war p = 22) befüllt. Der Inhalt wurde bei 30°C 5 Minuten bei 250 Upm gerührt. Parallel dazu wurden 5 mg des Metallocens Dimethylsilandiylbis(4,5,6,7-tetrahydro-1-indenyl)zirkondichlorid (aus Beispiel A, Verbindung (1), rac/meso = 38:1-Mischung) in 10 cm3 toluolischer Methylaluminoxanlösung (17 mmol Al) gelöst und durch 5 minütiges Stehenlassen voraktiviert. Die Lösung wurde in den Reaktor gegeben und es wurde eine Stunde bei 70°C polymerisiert.
Es wurden 2,03 kg Polymer erhalten. Die Metallocenaktivität betrug 406 kgPP/gMet. Am Polymeren wurden folgende Eigenschaften ermittelt:
VZ= 42 cm³/g; Molmasse Mw = 32500 g/mol, Mw/Mn = 1,9; Schmelzpunkt 140°C; II = 94,8 %; nᵢₛₒ = 35.

### Beispiel 2

### Darstellung des geträgerten Katalysatorsystems :

86 mg 0.18 mmol) Dimethylsilandiylbis(2-ethyl-1-indenyl)zirkonium-dichlorid und 82 mg (0.18 mmol) Dimethylsilandiylbis(4,5,6,7-tetrahydro-1-indenyl)zirkoniumdichlorid (aus Beispiel A, rac/meso 38:1) wurden bei Raumtemperatur in 18 cm³ (84 mmol Al) 30 %iger toluolischer Methylaluminoxan-Lösung¹⁾ gelöst. Der Ansatz wurde mit 50 cm3 Toluol verdünnt und 10 min bei 25 °C gerührt. In diese Lösung wurden 15 g SiO₂²⁾ langsam eingetragen. Nach beendeter Zugabe wurde der Ansatz 5 min bei Raumtemperatur gerührt. Anschließend wurde der Ansatz innerhalb von 2 h bei 40°C unter Vakuum bis zur Trockne eingeengt und der Rückstand 5 h bei 25°C und 10⁻³ mbar getrocknet. Es wurden 23 g eines frei fließenden, orange-rosa-farbenen Pulvers erhalten, das laut Elementaranalyse 0.16 Gew.-% Zr und 9,6 Gew.-% Al enthielt.

### Polymerisation:

Ein trockener 16 dm³-Reaktor, der zunächst mit Stickstoff und anschließend mit Propen gespült worden war, wurde mit 10 dm³ flüssigem Propen gefüllt. Als Scavenger wurden 8 cm³ 20 %iger Triethylaluminium-Lösung in Varsol (Witco) zugesetzt und der Ansatz 15 min bei 30°C gerührt. Anschließend wurde eine Suspension von 1.5 g des geträgerten Metallocen-Katalysators in 20 cm³ Exxsol in den Reaktor gegeben, auf die Polymerisationstemperatur von 65°C aufgeheizt und das Polymerisationssystem 1 h bei 65°C gehalten. Die Polymerisation wurde durch Abgasen des überschüssigen Monomers gestoppt und das erhaltene Polymer im Vakuum getrocknet. Es resultierten 3.1 kg Polypropylen-Pulver.
Die Katalysatoraktivität betrug 288 kg PP / (g Met x h) oder 2,1 kg PP/(g Kat x h). Das dargestellte isotaktische Polypropylen wies die folgenden Eigenschaften auf: Smp. 146°C; M_{w} = 180 000 g/mol, M_{w}/Mₙ = 3,6, VZ = 140 cm³/g, SD = 370 g/dm³
¹⁾ Albemarle Corporation, Baton Rouge, Louisiana, USA
²⁾ Silica Typ MS 948 , W.R. Grace, Davison Chemical Devision, Baltimore, Maryland, USA, Porenvolumen 1,6 ml/g, calciniert bei 800°C.

### Beispiel 3

### Darstellung des geträgerten Katalysatorsystems:

Der Ansatz aus Beispiel 2 wurde mit 113 mg (0.18 mmol) Dimethylsilandiylbis(2-methyl-4-phenyl-1-indenyl)zirkoniumdichlorid und 82 mg (0.18 mmol) Dimethylsilandiylbis(4,5,6,7-tetrahydro-1-indenyl)zirkoniumdichlorid (aus Beispiel A, rac/meso 38:1) wiederholt. Es resultierten 24 g eines frei fließenden rotorangen Pulvers, das laut Elementaranalyse 0,15 Gew.-% Zr und 10,1 Gew.-% Al enthielt.

### Polymerisation:

Die Polymerisation wurde analog Beispiel 2 durchgeführt.
Es resultierten 3,2 kg Polypropylen-Pulver.
Die Katalysatoraktivität betrug 258 kg PP/(g Met x h) oder 2,1 kg PP/(g Kat x h). Das dargestellte isotaktische Polypropylen wies die folgenden Eigenschaften auf: Smp. 147 °C ; M_{w} = 480 000 g/mol, M_{w}/Mₙ = 4,7, VZ = 430 cm³/g, SD = 360 g/dm³.

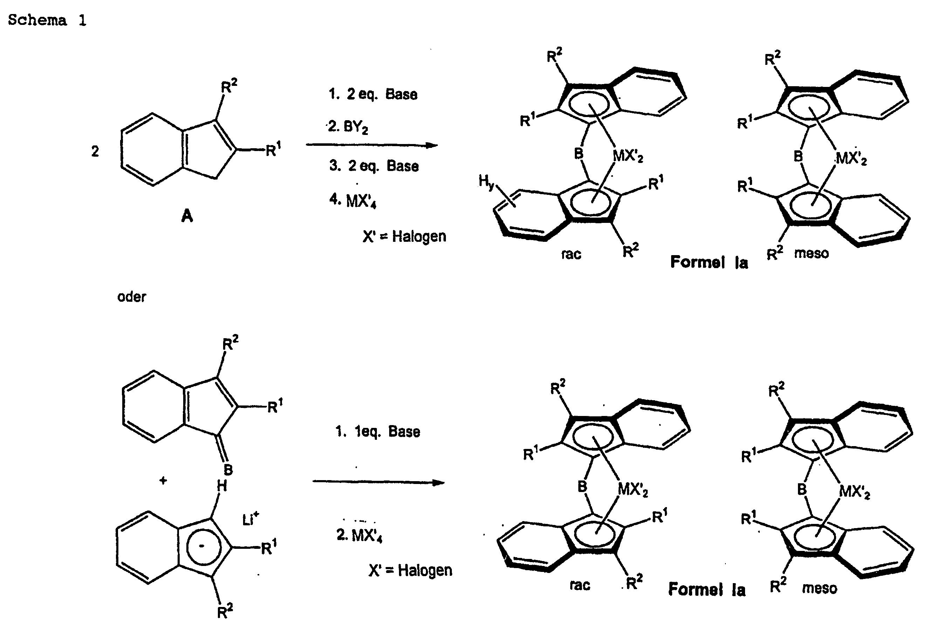

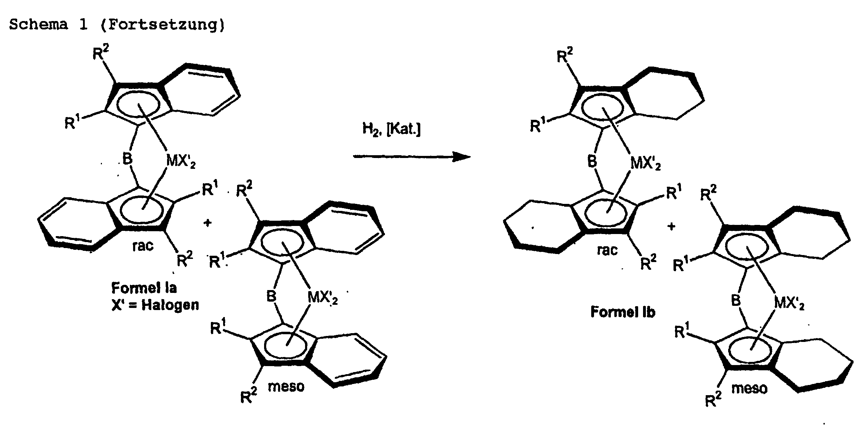

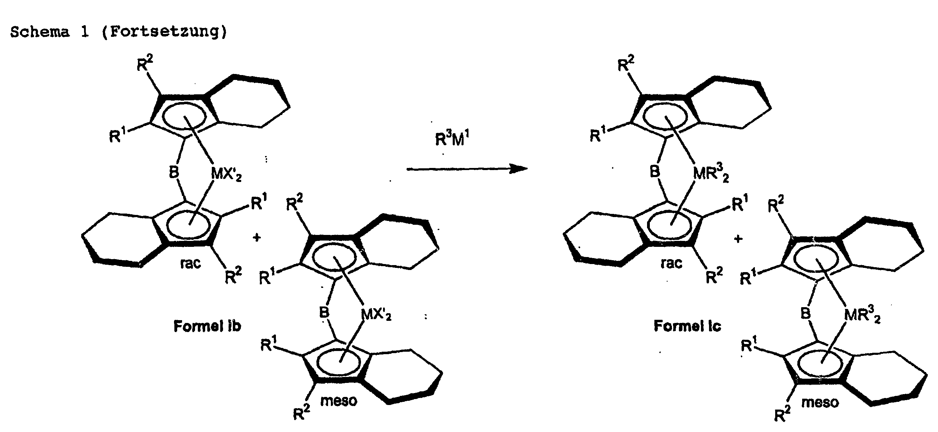

## Patentansprüche

1. Verfahren zur Herstellung eines rac/meso-Metallocens der Formel I mit einem rac/meso-Verhältnis von > 20:1 bis < 200:1 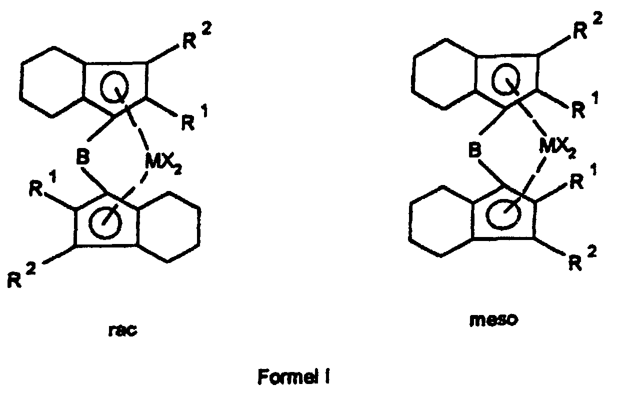 wobei
M ein Metall der Gruppen IIIb, IVb, Vb oder VIb des Periodensystems der Elemente bedeutet,
die Reste X gleich oder verschieden sind und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeuten,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten,
B eine Brücke zwischen den Indenylliganden bedeutet,
enthaltend die Schritte:
a) Umsetzung eines substituierten Cyclopentadiens der Formel A 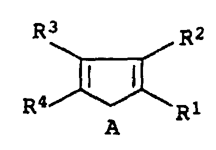 mit einem Verbrückungsreagenz BY₂ zu einem verbrückten Biscyclopentadienylligandsystem,
b) Umsetzung des verbrückten Biscyclopentadienylligandsystems mit einem Metallhalogenid zu einem Metallocen der Formel Ia 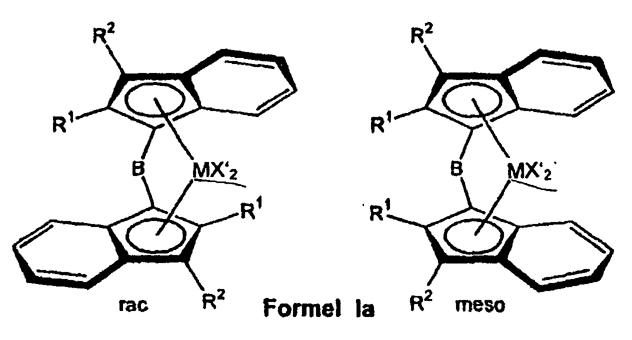 worin X' gleich Halogen ist,
c) Hydrierung des Metallocens der Formel Ia zu einem Metallocen der Formel Ib 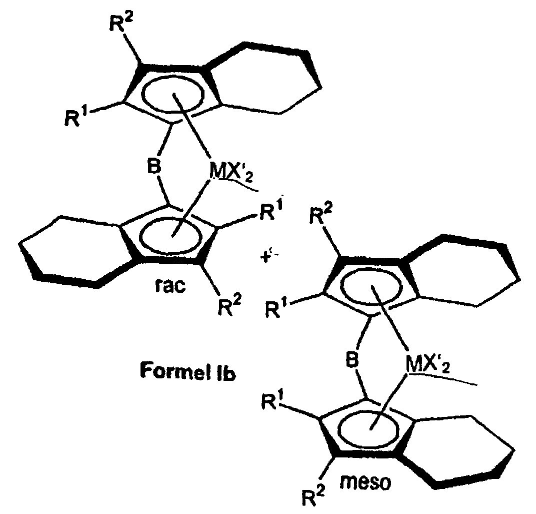
d) und optional die Umsetzung eines Metallocens der Formel Ib mit einer metallorganischen Verbindung R³M¹,
worin M¹ ein Element der 1.bis 3. Hauptgruppe ist und R³ ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe oder ein Pseudohalogen wie Nitril bedeutet, zu einem Metallocen der Formel Ic 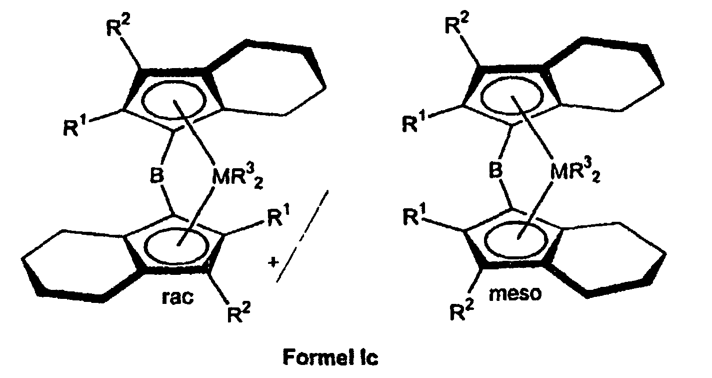 wobei alle Schritte im gleichen Lösungsmittel bzw. Lösungsmittelgemisch durchgeführt werden.

2. Chirales rac/meso-Metallocen der Formel I mit einem rac/meso-Verhältnis von > 20:1 bis < 200:1 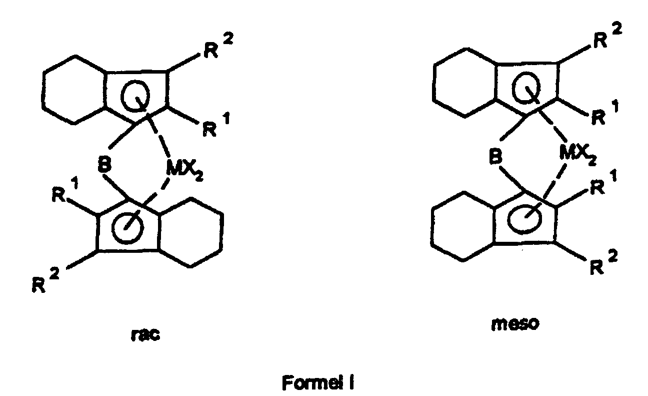 wobei
M ein Metall der Gruppen IIIb, IVb, Vb oder VIb des Periodensystems der Elemente bedeutet,
die Reste X gleich sind und lineares oder verzweigtes C₁-C₁₀-Alkyl oder ein Halogenatom bedeuten,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten,
B eine Brücke zwischen den Tetrahydro-Indenylliganden bedeutet.

3. Katalysator, enthaltend a) mindestens ein chirales rac/meso-Metallocen der Formel I gemäß Anspruch 2 und b) mindestens einen Cokatalysator.

4. Katalysator gemäß Anspruch 3 zusätzlich enthaltend einen Träger.

5. Katalysator gemäß Anspruch 3 oder 4, in vorpolymerisierter Form.

6. Verfahren zur Polymerisation von Olefinen in Gegenwart eines Katalysators gemäß einem oder mehreren der Ansprüche 3 bis 5.

7. Verwendung eines Katalysators gemäß einem oder mehreren der Ansprüche 3 bis 5 zur Polymerisation von Olefinen.

## Claims

1. A process for preparing a rac/meso-metallocene of the formula I having a rac/meso ratio of from > 20:1 to < 200:1 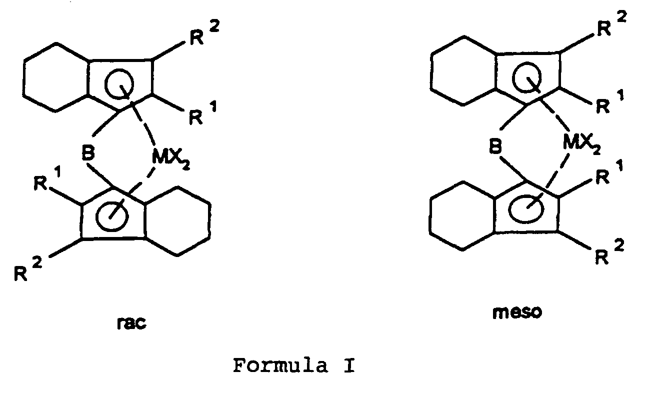 where
M is a metal of groups IIIb, IVb, Vb or VIb of the Periodic Table of the Elements,
the radicals X are identical or different and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile,
the radicals R¹ and R² are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or a NR⁵₂, SR⁵, OSiR⁵₃, SiR⁵₃ or PR⁵₂ group with R⁵ defined as for X,
B is a bridge between the indenyl ligands,
comprising the steps:
a) reaction of a substituted cyclopentadiene of the formula A 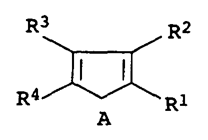 with a bridging reagent BY₂ to form a bridged biscyclopentadienyl ligand system,
b) reaction of the bridged biscyclopentadienyl ligand system with a metal halide to form a metallocene of the formula Ia 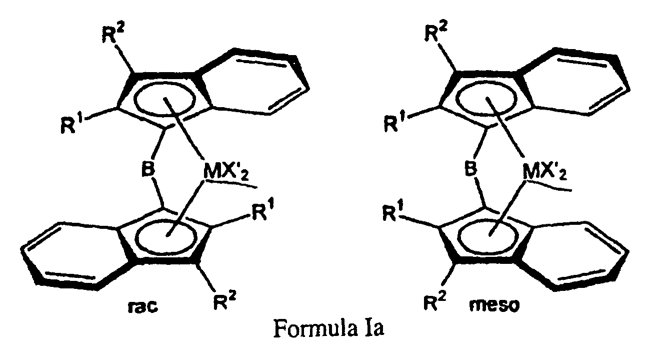 where X' is halogen,
c) hydrogenation of the metallocene of the formula Ia to form a metallocene of the formula Ib 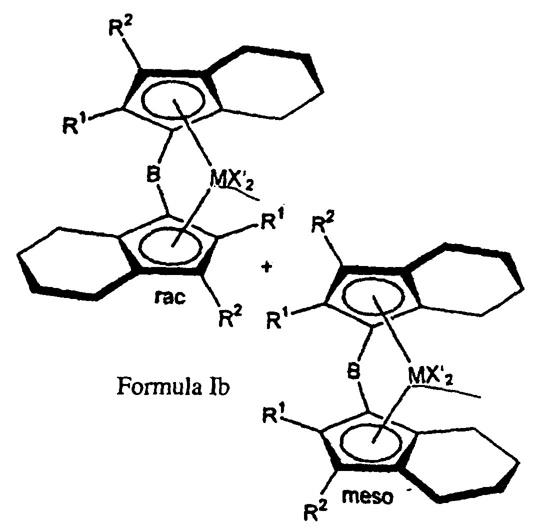
d) and, if desired, reaction of a metallocene of the formula Ib with an organometallic compound R³M¹, where M¹ is an element of main groups 1 to 3 and R³ is a hydrogen atom, a C₁-C₄₀ group such as a C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl group, an OH group or a pseudohalogen such as nitrile, to form a metallocene of the formula Ic 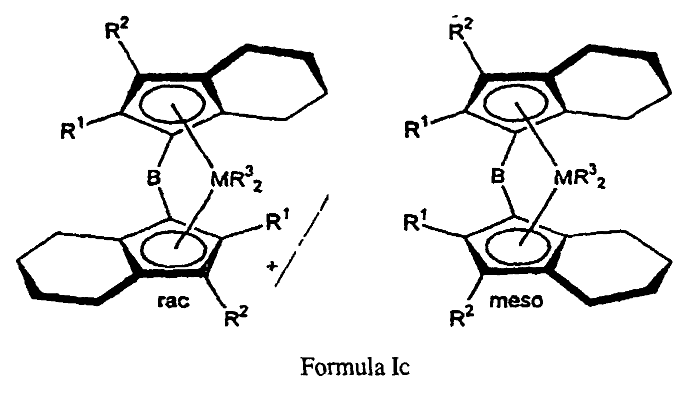
where all steps are carried out in the same solvent or solvent mixture.

2. A chiral rac/meso-metallocene of the formula I having an rac/meso ratio of from > 20:1 to < 200:1 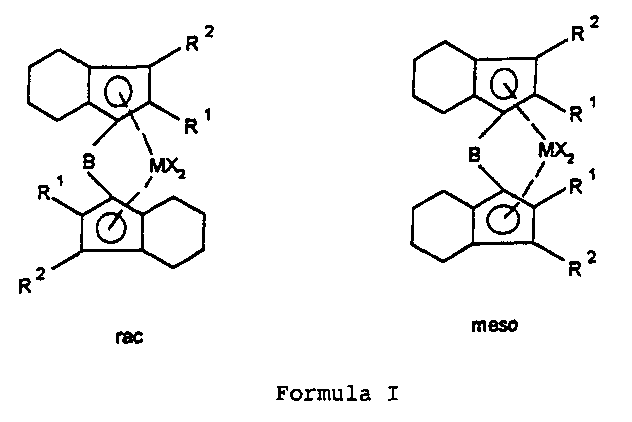 where
M is a metal of groups IIIb, IVb, Vb or VIb of the Periodic Table of the Elements,
the radicals X are identical and are each linear or branched C₁-C₁₀-alkyl, a halogen atom,
the radicals R¹ and R² are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or a NR⁵₂, SR⁵, OSiR⁵₃, SiR⁵₃ or PR⁵₂ group with R⁵ defined as for X,
B is a bridge between the tetrahydroindenyl ligands.

3. A catalyst comprising a) at least one chiral rac/meso-metallocene of the formula I as claimed in claim 2 and b) at least one cocatalyst.

4. A catalyst as claimed in claim 3 which further comprises a support.

5. A catalyst as claimed in claim 3 or 4, in prepolymerized form.

6. A process for polymerizing olefins in the presence of a catalyst as claimed in one or more of claims 3 to 5.

7. The use of a catalyst as claimed in one or more of claims 3 to 5 for the polymerization of olefins.

## Revendications

1. Procédé de préparation d'un métallocène racémique/méso de formule I présentant un rapport racémique/méso supérieur à 20:1 et inférieur à 200:1 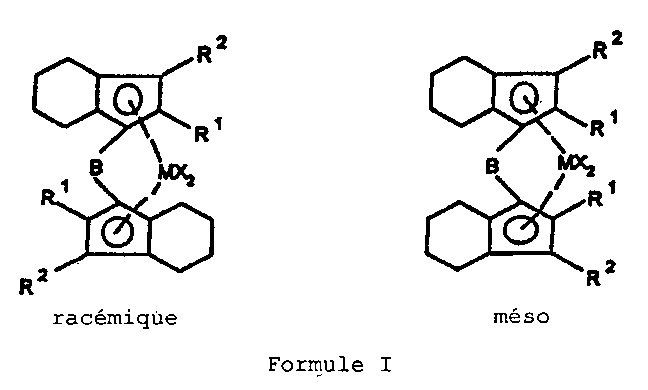 formule dans laquelle
M représente un atome d'un métal choisi dans le groupe IIIb, IVb, Vb ou VIb de la Classification Périodique des Eléments,
les restes X sont identiques ou différents et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile,
les restes R¹ et R² sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X,
B représente un pont entre les ligands indényle,
comprenant les étapes consistant à :
a) faire réagir un cyclopentadiène substitué de formule A 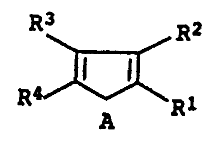 et un réactif de pontage BY₂ pour donner un système de ligand bis-cyclopentadiényle ponté,
b) faire réagir le système de ligand bis-cyclopentadiényle ponté et un halogénure métallique pour donner un métallocène de formule Ia 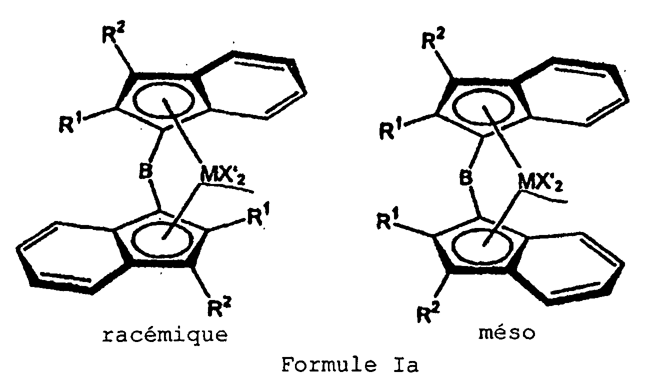 dans laquelle X' représente un atome d'halogène,
c) hydrogéner le métallocène de formule Ia pour donner un métallocène de formule Ib 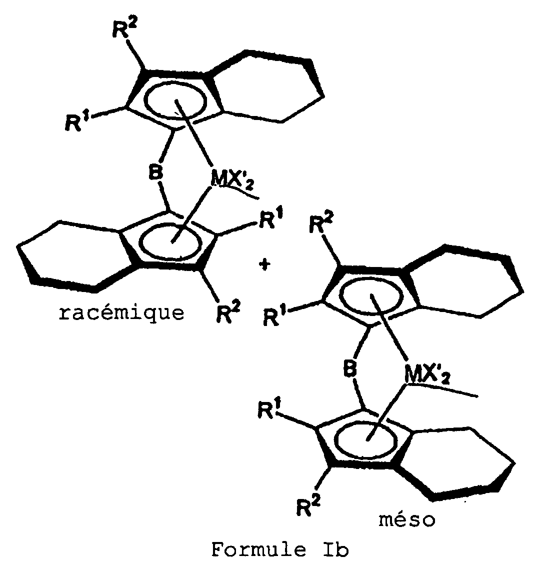
d) et, éventuellement, à faire réagir le métallocène de formule Ib et un composé organométallique R³M¹, dans lequel M¹ représente un atome d'un élément choisi dans le 1er au 3ème groupe principal, et R³ représente un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH ou un pseudohalogène tel qu'un groupe nitrile, pour obtenir un métallocène de formule Ic 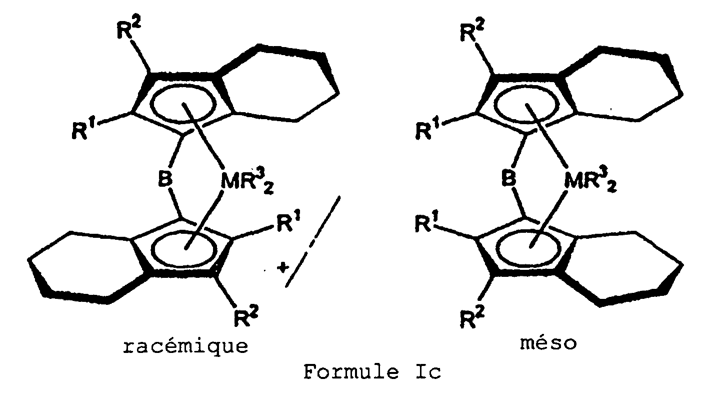 toutes les étapes étant réalisées dans le même solvant ou mélange de solvants.

2. Métallocène racémique/méso chiral de formule I présentant un rapport racémique/méso supérieur à 20:1 et inférieur à 200:1 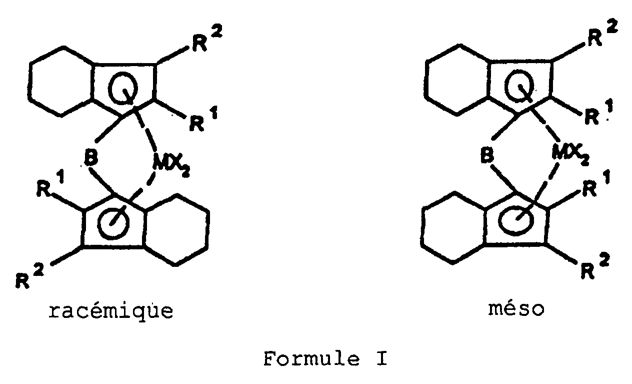 formule dans laquelle
M représente un atome d'un métal choisi dans le groupe IIIb, IVb, Vb ou VIb de la Classification Périodique des Eléments,
les restes X sont identiques et représentent un groupe alkyle en C₁ à C₁₀ linéaire ou ramifié ou un atome d'halogène,
les restes R¹ et R² sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X, et
B représente un pont entre les ligands tétrahydroindényle.

3. Catalyseur contenant a) au moins un métallocène racémique/méso chiral de formule I selon la revendication 2, et b) au moins un co-catalyseur.

4. Catalyseur selon la revendication 3, contenant, de plus, un support.

5. Catalyseur selon la revendication 3 ou 4, sous forme prépolymérisée.

6. Procédé pour la polymérisation d'oléfines en présence d'un catalyseur selon une ou plusieurs des revendications 3 à 5.

7. Mise en oeuvre du catalyseur selon une ou plusieurs des revendications 3 à 5, pour la polymérisation d'oléfines.
